# EUROPEAN PATENT APPLICATION

(11) **EP 2 942 910 A1**
(43) Date of publication of application: **11.11.2015**
(21) Application number: 14873865.1
(22) Date of filing: 24.04.2014
(51) Int. Cl.: H04L 12/58

(54) **INFORMATION DISPLAY METHOD FOR INSTANT COMMUNICATION TOOL, AND USER TERMINAL**

(30) Priority: 23.12.2013 CN 201310723920
(71) Applicant: Huawei Technologies Co., Ltd., Longgang District Shenzhen, Guangdong 518129 (CN)
(72) Inventor: LU, Xiaofeng, Shenzhen Guangdong 518129 (CN); FAN, Shaoting, Shenzhen Guangdong 518129 (CN)
(74) Representative: Goddar, Heinz J.
(86) International application number: PCT/CN2014/076134
(87) International publication number: WO 2015/096322

(57) **Abstract**

An information display method and a user terminal for an instant messaging tool are disclosed. The method includes: displaying at least two messages; receiving a selection operation performed by a first user on at least one message of the messages displayed, and using the at least one message as a first message; and sending an input second message that corresponds to the first message and related information that represents the first message, where the first message is associated with the second message, so that the second user terminal determines the first message according to the related information, and displays the first message and the second message in an associated manner. It can be seen from embodiments of the present invention that, after a first user selects a first message from multiple messages displayed, an input second message that corresponds to the first message and related information are sent, where the first message is associated with the second message, so that the second user terminal displays the first message and the second message in an associated manner, which distinctly display that the second message is a reply message of the first message, and the user does not need to actively search by filtering.

## Description

### CROSS-REFERENCE TO RELATED APPLICATIONS

This application claims priority to Chinese Patent Application No. 201310723920.1, filed with the Chinese Patent Office on December 23, 2013, and entitled "INFORMATION DISPLAY METHOD AND USER TERMINAL FOR INSTANT MESSAGING TOOL", which is incorporated herein by reference in its entirety.

### TECHNICAL FIELD

The present invention relates to the field of instant messaging, and in particular, to an information display method and a user terminal for an instant messaging tool.

### BACKGROUND

With the rapid development of an instant messaging technology, instant messaging tools such as WeChat, 263, and QQ have become an indispensable part in people's life.

At present, when an instant messaging tool is used to exchange information, the information exchanged is generally displayed in chronological order.

Obviously, when information is displayed in such chronological order, after a user sends a message, if the user wants to determine whether another user replies to this message, the user needs to actively search by filtering all messages sent following this message, which is very time-consuming.

### SUMMARY

The technical problem solved by the present invention is to provide an information display method and a user terminal for an instant messaging tool, so as to distinctly display a reply message in response to a message sent by a user, and the user does not need to actively search by filtering, thereby saving time of the user.

To this end, the present invention provides the following technical solutions to the technical problem:

According to a first aspect, an embodiment of the present invention provides an information display method for an instant messaging tool, including:
displaying at least two messages;
receiving a selection operation performed by a first user on at least one message of the at least two messages displayed, and using the at least one message as a first message;
acquiring related information used for representing the first message;
sending a second message which is in response to the first message and input by the first user and the related information, where the first message is associated with the second message, so that a second user terminal determines the first message according to the related information, and displays the first message and the second message in an associated manner,
where the second user terminal is a terminal from which the second user logs in, and the second user is a user sending the first message.

In a first possible implementation manner of the first aspect, the related information used for representing the first message is specifically: content of the first message or an identifier of the first message.

With reference to the first possible implementation manner of the first aspect, in a second possible implementation manner of the first aspect, if the related information used for representing the first message is the identifier of the first message,
before the sending, by the first user terminal, the second message and the related information, the method further includes:
generating, by the first user terminal, an identifier of the second message; and
when sending, by the first user terminal, the second message and the related information, the method further includes: sending, by the first user terminal, the identifier of the second message, where the identifier of the first message is associated with the identifier of the second message.

With reference to the first possible implementation manner of the first aspect, in a third possible implementation manner of the first aspect, if the related information used for representing the first message is the identifier of the first message,
the sending, by the first user terminal, the second message and the related information is specifically:
sending, by the first user terminal, the second message and the identifier of the first message to a server, where the identifier of the first message is associated with the second message, so that the server generates an identifier of the second message, and associates the identifier of the first message with the identifier of the second message.

With reference to the first aspect, or any one of the first to third possible implementation manners of the first aspect, in a fourth possible implementation manner of the first aspect, the sending, by the first user terminal, the second message and the related information is specifically:
sending, by the first user terminal to a server, the second message and the related information, so that the server sends the second message and the related information to the second user terminal, or the server sends a first push notification to the second user terminal, where the first push notification enables the second user terminal to acquire the second message and the related information from the server.

According to a second aspect, an embodiment of the present invention provides an information display method for an instant messaging tool, including:
sending a first message, so that a first user terminal displays the first message, receives a selection operation performed by a first user on the displayed first message, and sends a second message which is in response to the first message and input by the first user and acquired related information used for representing the first message, where the first message is associated with the second message;
determining the first message according to the related information sent by the first user terminal; and
displaying, in an associated manner, the first message and the second message that is sent by the first user terminal.

In a first possible implementation manner of the second aspect, the related information used for representing the first message is specifically: content of the first message or an identifier of the first message.

With reference to the second aspect, or the first possible implementation manner of the second aspect, in a second possible implementation manner of the first aspect, after the displaying, in an associated manner, the first message and the second message, the method further includes:
displaying in a dimmed manner or in a folded manner or hiding a message displayed in a non-associated manner.

With reference to the second aspect, or any one of the first to second possible implementation manners of the second aspect, in a third possible implementation manner of the first aspect, after the displaying, in an associated manner, the first message and the second message, the method further includes:
receiving a switching operation performed by the second user on the displayed first message or second message; and
switching to a message associated with the message on which the switching operation is performed.

With reference to the second aspect, or any one of the first to third possible implementation manners of the second aspect, in a fourth possible implementation manner of the first aspect, the sending a first message is specifically:
sending the first message to a server, so that the server sends the first message to the first user terminal, or the server sends a second push notification to the first user terminal, where the second push notification enables the first user terminal to acquire the first message from the server.

According to a third aspect, an embodiment of the present invention provides a user terminal for an instant messaging tool, where the user terminal is a first user terminal, and the first user terminal includes: a display unit, a receiving unit, an acquisition unit, and a sending unit;
the display unit is configured to display at least two messages;
the receiving unit is configured to receive a selection operation performed by a first user on at least one message of the at least two messages displayed, and use the at least one message as a first message;
the acquisition unit is configured to acquire related information used for representing the first message; and
the sending unit is configured to send a second message which is in response to the first message and input by the first user and the related information, where the first message is associated with the second message, so that a second user terminal determines the first message according to the related information, and displays the first message and the second message in an associated manner,
where the second user terminal is a terminal from which the second user logs in, and the second user is a user sending the first message.

In a first possible implementation manner of the third aspect, the related information used for representing the first message is specifically: content of the first message or an identifier of the first message.

With reference to the first possible implementation manner of the third aspect, in a second possible implementation manner of the third aspect, if the related information used for representing the first message is the identifier of the first message, the first user terminal further includes: a generating unit,
where the generating unit is configured to generate an identifier of the second message; and
the sending unit is further configured to send the identifier of the second message, where the identifier of the first message is associated with the identifier of the second message.

With reference to the first possible implementation manner of the third aspect, in a third possible implementation manner of the third aspect, if the related information used for representing the first message is the identifier of the first message,
that the sending unit is configured to send the second message and the related information is specifically:
the sending unit is configured to send the second message and the identifier of the first message to a server, where the identifier of the first message is associated with the second message, so that the server generates an identifier of the second message, and associates the identifier of the first message with the identifier of the second message.

With reference to the third aspect, or any one of the first to third possible implementation manners of the third aspect, in a fourth possible implementation manner of the third aspect, that the sending unit is configured to send the second message and the related information is specifically:
the sending unit is configured to send the second message and the related information to a server, so that the server sends the second message and the related information to the second user terminal, or the server sends a first push notification to the second user terminal, where the first push notification enables the second user terminal to acquire the second message and the related information from the server.

According to a fourth aspect, an embodiment of the present invention provides a user terminal for an instant messaging tool, where the user terminal is a second user terminal, and the second user terminal includes: a sending unit, a determining unit, and a display unit;
the sending unit is configured to send a first message, so that a first user terminal displays the first message, receives a selection operation performed by a first user on the displayed first message, and sends a second message which is in response to the first message and input by the first user and acquired related information used for representing the first message, where the first message is associated with the second message;
the determining unit is configured to determine the first message according to the related information sent by the first user terminal; and
the display unit is configured to display, in an associated manner, the first message and the second message that is sent by the first user terminal.

In a first possible implementation manner of the fourth aspect, the related information used for representing the first message is specifically: content of the first message or an identifier of the first message.

With reference to the fourth aspect, or the first possible implementation manner of the fourth aspect, in a second possible implementation manner of the third aspect, the display unit is further configured to display in a dimmed manner or in a folded manner or hide a message displayed in a non-associated manner.

With reference to the fourth aspect, or any one of the first to second possible implementation manners of the fourth aspect, in a third possible implementation manner of the third aspect, the second user terminal further includes a receiving unit;
the receiving unit is further configured to receive a switching operation performed by the second user on the displayed first message or second message; and
the display unit is further configured to switch to a message associated with the message on which the switching operation is performed.

With reference to the fourth aspect, or any one of the first to third possible implementation manners of the fourth aspect, in a fourth possible implementation manner of the third aspect, that the sending unit is configured to send a first message is specifically:
the sending unit is configured to send the first message to a server, so that the server sends the first message to the first user terminal, or the server sends a second push notification to the first user terminal, where the second push notification enables the first user terminal to acquire the first message from the server.

It can be learned from the foregoing technical solutions that, in the embodiments of the present invention, at least two messages are displayed; after a first user selects a first message from the at least two messages displayed, it indicates that the first user wants to reply to the first message, and in this case, a second message which is in response to the first message and input by the first user and related information are sent, so that a sender of the first message, namely a second user terminal, can determine the first message according to the related information. The first message is associated with the second message, so that the second user terminal displays the first message and the second message in an associated manner, which distinctly displays that the second message is a reply message in response to the first message, and the user does not need to actively search by filtering, thereby saving time of the user.

### BRIEF DESCRIPTION OF DRAWINGS

FIG. 1 is a schematic flowchart of a first embodiment of a method according to an embodiment of the present invention;
FIG. 2 is a schematic flowchart of a second embodiment of a method according to an embodiment of the present invention;
FIG. 3 is a schematic flowchart of a third embodiment of a method according to an embodiment of the present invention;
FIG. 4 is a schematic flowchart of a fourth embodiment of a method according to an embodiment of the present invention;
FIG. 5 is an interface displayed after a member B selects a message in the embodiment of FIG. 4;
FIG. 6 is an interface where two messages are displayed in an associated manner in the embodiment of FIG. 4;
FIG. 7 is a schematic flowchart of a fifth embodiment of a method according to an embodiment of the present invention;
FIG. 8 is a schematic flowchart of a sixth embodiment of a method according to an embodiment of the present invention;
FIG. 9 is a schematic structural diagram of a first embodiment of a first user terminal according to an embodiment of the present invention;
FIG. 10 is a schematic structural diagram of a second embodiment of a first user terminal according to an embodiment of the present invention;
FIG. 11 is a schematic structural diagram of a third embodiment of a first user terminal according to an embodiment of the present invention;
FIG. 12 is a schematic structural diagram of a fourth embodiment of a first user terminal according to an embodiment of the present invention;
FIG. 13 is a schematic structural diagram of a first embodiment of a second user terminal according to an embodiment of the present invention; and
FIG. 14 is a schematic structural diagram of a second embodiment of a second user terminal according to an embodiment of the present invention.

### DESCRIPTION OF EMBODIMENTS

An instant messenger (Instant Messenger, IM for short) is an Internet-based instant message communication service, and common instant messaging tools include MSN, QQ, WeChat, 263 enterprise messenger, Yixin, and the like.

At present, when an instant messaging tool is used to exchange information, the information exchanged is generally displayed in chronological order.

Obviously, when information is displayed in such chronological order, after a user sends a message, if the user wants to determine whether another user replies to this message, the user needs to actively search by filtering all messages sent following this message. For example, in an instant messaging group, a user A sends a message 01, and then multiple users send multiple messages in the group; if the user A wants to determine whether other users reply to the message 01, the user A needs to search the messages displayed following the message 01 one by one according to content of the messages. Obviously, this display manner makes a search by the user time-consuming.

In the embodiments of the present invention, an information display method and a user terminal for an instant messaging tool are provided, so as to distinctly display a reply message in response to a message sent by a user, and the user does not need to actively search by filtering, thereby saving time of the user.

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons skilled in the art based on the embodiments of the present invention without creative efforts shall fall within the protection scope of the present invention.

The terms such as "first", "second", "third", and "fourth" used in the specifications, the claims, and the foregoing accompanying drawings of the present invention are used to distinguish similar objects, and are not necessarily used to describe a specific sequence or specific precedence order. It should be understood that, data used in this manner may be exchanged in a proper circumstance, so that the embodiments described herein can be implemented in other sequences than the sequence shown in the drawings or in the content described herein. In addition, the terms "include" and "have" as well as any variation thereof are intended to cover non-exclusive inclusion, for example, a process, a method, a system, a product, or a device including a series of steps or units is not necessarily limited to the clearly listed steps or units, but may include other steps or units which are not clearly listed or are intrinsic to the process, method, product or device.

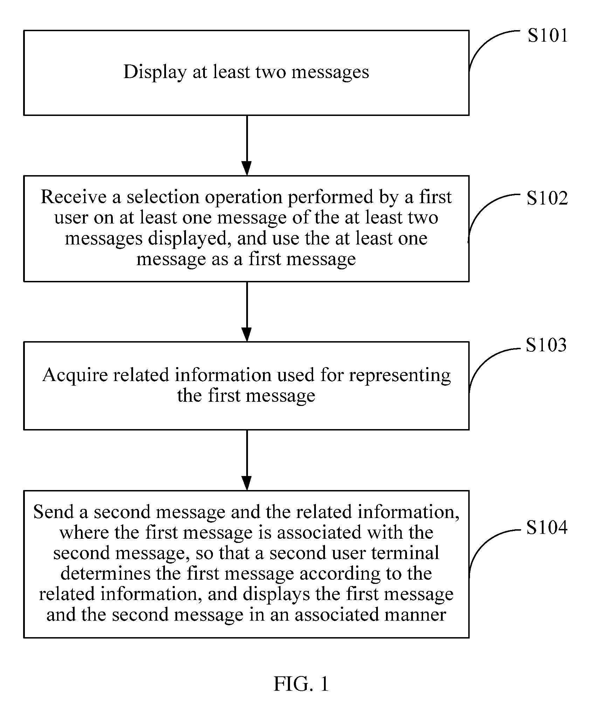

Referring to FIG. 1, an embodiment of the present invention provides a first embodiment of an information display method for an instant messaging tool, and this embodiment is applied to a first user terminal. The first user terminal is a terminal from which a first user logs in. It can be understood that, in the embodiment of the present invention, the first user corresponds to a user account, and therefore, the first user may use the user account to log in from different terminals. For example, a user having a WeChat account may use the WeChat account to log in from different terminals such as a mobile phone, an IPAD, and a notebook computer.

This embodiment specifically includes:
S101: A first user terminal displays at least two messages.

The at least two messages may be sent from different users, for example, may be messages sent by users in a group.
S102: The first user terminal receives a selection operation performed by a first user on at least one message of the at least two messages displayed, and uses the at least one message as a first message.

In this step, after the first user selects one or more messages, the first user terminal may determine, by detecting a coordinate range of a position of the selection operation on a display screen, the one or more messages selected by the first user, where the message is the first message.

In this step, after the first user terminal receives the selection operation performed by the first user on the first message, it indicates that the first user wants to reply to the first message. The selection operation may be an operation such as a tap, slide, or touch & hold operation performed by the first user on the first message by using a mouse or a touchscreen, which is not limited in the embodiment of the present invention.

It should be noted that, the first user terminal is a terminal from which the first user logs in, and therefore, all operations performed on the first user terminal may be regarded as operations performed by the first user.
S103: The first user terminal acquires related information used for representing the first message.

Herein, the related information is used for representing the first message, and therefore, may be an identifier of the first message, and may also be content of the first message, or the like, which is not limited in the embodiment of the present invention.
S104: The first user terminal sends a second message which is in response to the first message and input by the first user and the related information, where the first message is associated with the second message, so that a second user terminal determines the first message according to the related information, and displays the first message and the second message in an associated manner.

The second user terminal is a terminal from which the second user logs in; it can be understood that, in the embodiment of the present invention, the second user corresponds to a user account, and therefore, the second user may use the user account to log in from different terminals. Therefore, the second user terminal actually may include multiple terminals. For example, if the second user logs in from a mobile phone and an IPAD separately, the second user terminal includes the mobile phone, and also includes the IPAD. It should be noted that in this embodiment, the second user is a user sending the first message, and therefore, actually, the second user sends the first message by using the second user terminal. The second user terminal that receives the second message and related information in step S103 actually may be a physical entity different from the second user terminal that sends the first message, but both are user terminals from which the second user logs in.

In this embodiment, a special input area may be set on the first user terminal, where each message input in the input area is a reply message in response to one or more messages. It may also be that, by default, after a message is selected, all messages input in the input area are reply messages in response to the selected message; or a certain message may be selected after messages are input in the input area, and this may also indicate that all the messages input in the input area are reply messages in response to the selected message. The embodiment of the present invention does not limit the specific manner of acquiring the input second message in response to the first message.

In this embodiment, the first message is sent by the second user; therefore, in this step, the first user terminal returns the second message, which is a reply to the first message, to the second user by using the second user terminal, and the first message and the second message are displayed on the second user terminal in an associated manner, so that the second user can distinctly determine that the second message is a reply message in response to the first message. Certainly, in this step, the first user terminal may further send an identifier of the first user, so that the second user terminal displays that a user sending the second message is the first user. It should be noted that, because the second user is the user sending the first message, the second user terminal generally stores the first message; therefore, the second user terminal can determine the first message as long as the related information of the first message is sent to the second user terminal.

It can be learned from the foregoing technical solution that, in this embodiment, at least two messages are displayed; after a first user selects a first message from the at least two messages displayed, it indicates that the first user wants to reply to the first message, and in this case, a second message which is in response to the first message and input by the first user and related information are sent, so that a sender of the first message, namely, a second user terminal, can determine the first message according to the related information, and the first message is associated with the second message, so that the second user terminal displays the first message and the second message in an associated manner, which distinctly displays that the second message is a reply message in response to the first message, and the user does not need to actively search by filtering, thereby saving time of the user.

Moreover, in the embodiment of the present invention, when the first message and the second message are displayed in an associated manner, a current manner, in which messages are displayed in chronological order, may not be changed, that is, the first message, the second message, and other messages are still displayed in chronological order.

In step S104 of this embodiment, the first user terminal sends the second message and the related information, so that the second user terminal acquires the second message and the related information. Actually, in this step, the first user terminal may directly send the second message and the related information to the second user terminal, and the first user terminal may also send the second message and the related information to a server, and after receiving the second message and the related information, the server may directly send the second message and the related information to the second user terminal, for example, when determining that the second user is online, the server directly sends the foregoing information; or the server may send a first push notification to the second user terminal, where the first push notification enables the second user terminal to acquire the second message and the related information from the server, for example, when determining that the second user is offline, the server sends a first push notification, so that the next time the second user goes online, the second user actively acquires the foregoing information from the server by using the second user terminal from which the second user logs in when the second user goes online.

All "acquisition" actions in the embodiment of the present invention not only include receiving but also include active obtaining.

This embodiment may be used in a group chat process, that is, the first user and the second user of this embodiment may be users in a same group, and the first message and the second message may be messages displayed to all users in the group. Specifically, the first message sent by the second user is actually sent to all the users in the group to which the first user and the second user belong. Messages displayed on the first user terminal are also messages sent to all the users in the group, and specifically, that the first user terminal sends the second message is also sending the second message to all the users in the group.

Considering circumstances such as a careless operation of the user, in this embodiment, the associated display of the second message and the first message may also be cancelled. Specifically, after step S104, the first user terminal may receive an associated display cancellation operation performed by the first user on the first message. A specific implementation manner of the cancellation operation herein may be a preset specific operation, which is not limited in the embodiment of the present invention. After that, the first user terminal acquires related information used for representing the first message or representing the second message, and sends a disassociation request, where the disassociation request includes the related information used for representing the first message or representing the second message, so that the second user terminal cancels the associated display of the first message and the second message.

In this embodiment, when the first user terminal detects that the first user selects the first message, and the first user is inputting a second message, the first user terminal may further send an input notification to the second user terminal, where the input notification enables the second user terminal to display that the first user is replying to the first message.

In this embodiment, after the first user selects the first message, the first user terminal acquires the related information used for representing the first message. In fact, the related information is used to enable the second user terminal to learn a message to which the received message specifically replies. Therefore, the related information may be content of the first message, and in this case, the first user terminal associates the content of the first message with the second message.

However, generally, an identifier is generated for each message, and the identifier corresponds to the message. Therefore, a preferable manner is that the related information is an identifier of the first message. In this case, in step S103, the first user terminal acquires the identifier of the first message. It is also the identifier of the first message that is sent in step S104.

In this case, a corresponding identifier may also be generated for the second message. A message identifier is generally generated by a message ID generator, where the message ID generator may be set in a user terminal, and may also be set in a server. The following uses two embodiments to separately describe situations in which message identifiers are generated by a user terminal or message identifiers are generated by a server.

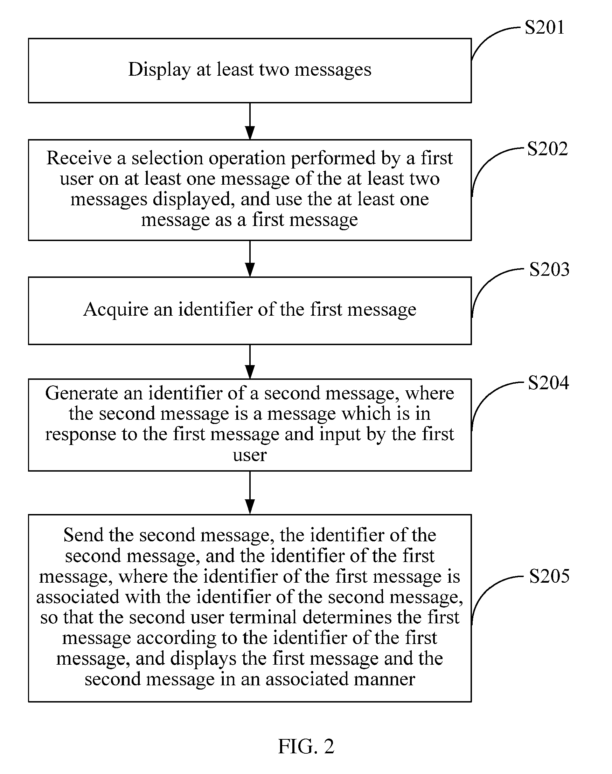

Referring to FIG. 2, an embodiment of the present invention provides a second embodiment of an information display method for an instant messaging tool, this embodiment is applied to a first user terminal, and the first user terminal is a terminal from which a first user logs in. Different from other embodiments, in this embodiment, message identifiers are generated by a user terminal.

This embodiment specifically includes:
S201: A first user terminal displays at least two messages.
S202: The first user terminal receives a selection operation performed by a first user on at least one message of the at least two messages displayed, and uses the at least one message as a first message.

For step S201 and step S202, refer to step S101 and step S102, and details are not repeated herein.
S203: The first user terminal acquires an identifier of the first message.

In this step, specifically, the first user terminal may acquire, according to position coordinates of the first message on a display screen, a message identifier corresponding to the position coordinates.

Herein, the acquired identifier of the first message may be generated by a second user terminal, and when sending the first message, a second user also sends the identifier of the first message.
S204: The first user terminal generates an identifier of a second message, where the second message is a message which is in response to the first message and input by the first user.

A sequence of performing this step and step S201 to step S203 is not limited; as long as the first user inputs the second message, the identifier of the message can be generated.

It should be noted that, when the first user terminal generates a message identifier, a preset identifier naming rule may be followed, for example, combining a generation sequence number of the message with an identifier of the first user terminal, so that the message identifier generated by the first user terminal will not be the same as message identifiers generated by other user terminals.
S205: The first user terminal sends the second message, the identifier of the second message generated in step S204, and the identifier of the first message acquired in step S203, where the identifier of the first message is associated with the identifier of the second message, so that the second user terminal determines the first message according to the identifier of the first message, and displays the first message and the second message in an associated manner.

In this step, the first user terminal may send the second message, the identifier of the second message, and the identifier of the first message to a server; when determining that the second user is online, the server sends the second message, the identifier of the second message, and the identifier of the first message to the second user terminal, and when determining that the second user is offline, the server sends a push notification to the second user, where the push notification enables the second user to actively acquire the second message, the identifier of the second message, and the identifier of the first message from the server by using the second user terminal from which the second user logs in when the second user goes online next time.

The server may further store the second message, and store the identifier of the second message and the identifier of the first message in an associated manner.

This embodiment focuses on the situation in which message identifiers are generated by a user terminal, and the first message and the second message are associated specifically by associating the identifier of the first message with the identifier of the second message, so that the second user terminal displays the first message and the second message in an associated manner, which distinctly displays that the second message is a reply message in response to the first message, and the user does not need to actively search by filtering, thereby saving time of the user.

The situation in which message identifiers are generated by a server is described in the following by using an embodiment.

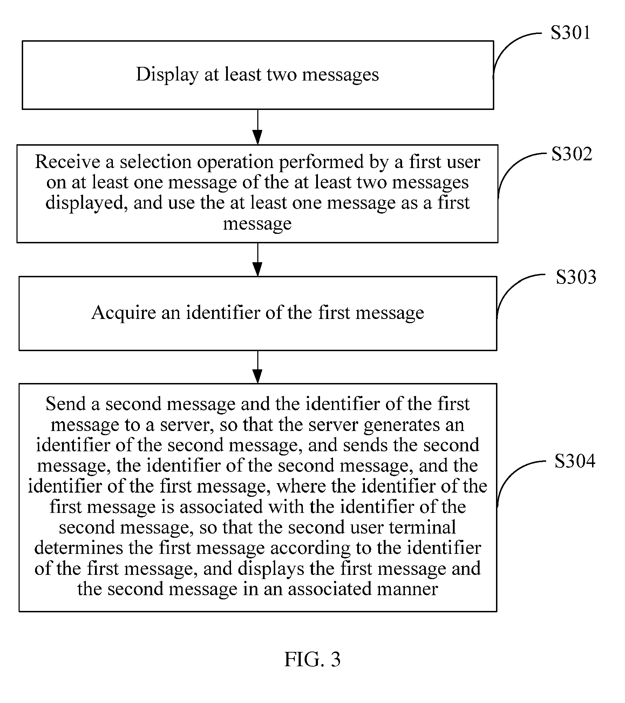

Referring to FIG. 3, an embodiment of the present invention provides a third embodiment of an information display method for an instant messaging tool, this embodiment is applied to a first user terminal, and the first user terminal is a terminal from which a first user logs in. Different from other embodiments, in this embodiment, message identifiers are generated by a server.

This embodiment specifically includes:
S301: A first user terminal displays at least two messages.
S302: The first user terminal receives a selection operation performed by a first user on at least one message of the at least two messages displayed, and uses the at least one message as a first message.

For step S301 and step S302, refer to step S101 and step S102, and details are not repeated herein.
S303: The first user terminal acquires an identifier of the first message.

In this step, specifically, the first user terminal may acquire, according to position coordinates of the first message on a display screen, a message identifier corresponding to the position coordinates.

Herein, the acquired identifier of the first message may be generated by a server; when a second user sends the first message, the server generates the identifier of the first message, and sends the identifier of the first message to the first user terminal, or the first user terminal acquires the identifier of the first message from the server.
S304: The first user terminal sends a second message and the identifier of the first message to a server, where the identifier of the first message is associated with the second message, so that the server generates an identifier of the second message, and sends the second message, the identifier of the second message, and the identifier of the first message, where the identifier of the first message is associated with the identifier of the second message, so that the second user terminal determines the first message according to the identifier of the first message, and displays the first message and the second message in an associated manner.

In this step, the first user terminal may send the second message, and the identifier of the first message to a server, and the server generates an identifier of the second message; when determining that the second user is online, the server sends the second message, the identifier of the second message, and the identifier of the first message to the second user terminal, and when determining that the second user is offline, the server sends a push notification to the second user, where the push notification enables the second user to actively acquire the second message, the identifier of the second message, and the identifier of the first message from the server by using the second user terminal from which the second user logs in when the second user goes online next time.

The server may further store the second message, and store the identifier of the second message and the identifier of the first message in an associated manner.

This embodiment focuses on the situation in which message identifiers are generated by a server, and the first message and the second message are associated specifically by associating the identifier of the first message with the identifier of the second message, so that the second user terminal displays the first message and the second message in an associated manner, which distinctly displays that the second message is a reply message in response to the first message, and the user does not need to actively search by filtering, thereby saving time of the user.

In the embodiment of the present invention, the second user terminal displays the first message and the second message in an associated manner. Herein, the associated display refers to a display manner in which the user is capable of distinctly recognizing that there is an association between messages. The first message and the second message may be displayed in a highlighted manner, displayed in a color or font different from those of other messages, displayed in a manner of being marked with identical symbols, or displayed in another manner, which is not limited in the embodiment of the present invention. Actually, after the first user sends the second message and the related information which is used for representing the first message, the first user terminal may also display the first message and the second message in an associated manner, so that the first user can also distinctly recognize a reply message from the first user to the second user. The following gives descriptions by using an embodiment and with reference to a specific application scenario.

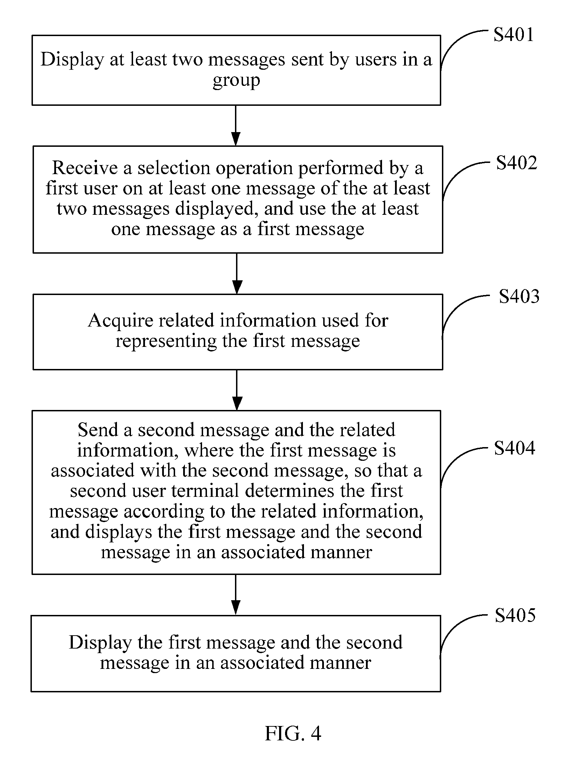

Referring to FIG. 4, an embodiment of the present invention provides a fourth embodiment of an information display method for an instant messaging tool, and this embodiment is applied to a first user terminal. The first user terminal is a terminal from which a first user logs in. Different from other embodiments, in this embodiment, a first message and a second message are displayed in an associated manner on the first user terminal.

To better describe the embodiment, this embodiment is described by using an application scenario in group chat as an example. This embodiment specifically includes:
S401: A first user terminal displays at least two messages sent by users in a group. A first user is one of the users of the group.
S402: The first user terminal receives a selection operation performed by the first user on at least one message of the at least two messages displayed, and uses the at least one message as a first message.

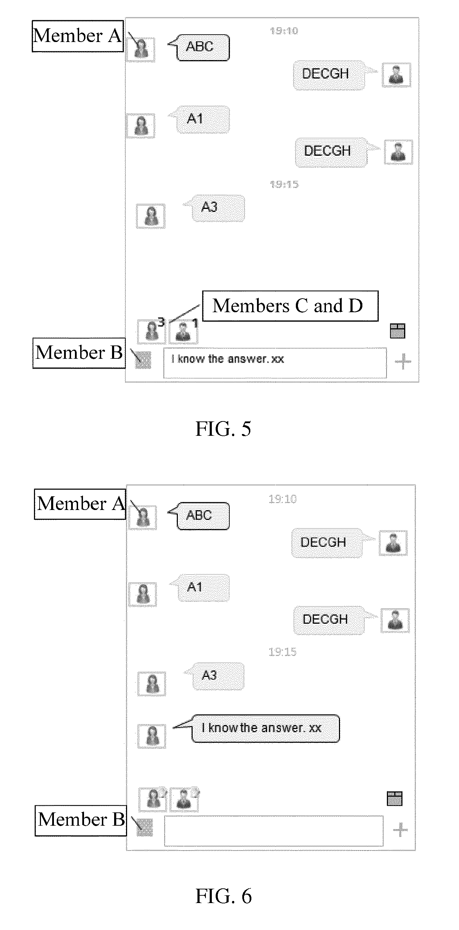

As shown in FIG. 5, a terminal from which a member B logs in displays multiple messages sent by multiple users. After the member B selects one of the messages, that is, message "ABC", the terminal from which the member B logs in receives a selection operation on the message "ABC". Herein, the message "ABC" is the first message in the embodiment of the present invention.
S403: The first user terminal acquires related information used for representing the first message.

Herein, the related information may be an identifier of the first message, and may also be content of the first message.
S404: The first user terminal sends a second message which is in response to the first message and input by the first user and the related information, where the first message is associated with the second message, so that a second user terminal determines the first message according to the related information, and displays the first message and the second message in an associated manner.
S405: The first user terminal displays the first message and the second message in an associated manner.

As shown in FIG. 6, after selecting the message "ABC", the member B replies to the selected message, and on the first user terminal, a reply message "I know the answer. xx" is displayed in an associated manner with the selected message "ABC". On the second user terminal, the message "I know the answer. xx" is also displayed with the message "ABC" in an associated manner, and therefore, both the first user and the second user can distinctly recognize that the second message is a reply message in response to the first message.

It should be noted that, an executing sequence of this step and step S402 to step S404 is not limited, as long as it is satisfied that the steps are executed after step S401.

When the associated display of the first message and the second message is implemented in this step, specifically, the first user terminal may set both a display attribute of the first message and a display attribute of the second message to a first attribute identifier. Herein, the display attribute may be a parameter of one or more display attributes. For example, the display attribute is a color attribute, and therefore, the color attributes of the first message and the second message may be set to a same color identifier. Therefore, the associated display can be implemented according to the same color identifier.

In this embodiment, after replying to the first message with the second message, the first user may continue to reply to the first message, and in this case, the first user terminal and the second user terminal may further display all reply messages in response to the first message and the first message in an associated manner. The first user may further reply to a message of the second user or messages of other users in the group, for example, the first user terminal may further display a third message and a fourth message in an associated manner; in this case, the first user terminal may set both a display attribute of the third message and a display attribute of the fourth message to a second attribute identifier, where the first attribute identifier is different from the second attribute identifier, so that the associated display of the third message and the fourth message is distinguished from the associated display of the first message and the second message. The first user terminal may still display, in chronological order, which is the same as an existing manner, all messages that need to be displayed.

It should be noted that, in this embodiment, the first message and the second message may not only be displayed in an associated manner on the first user terminal and the second user terminal, but also be displayed in an associated manner on terminals from which other users in the group log in.

In this embodiment, after the first user selects the first message, in a period in which the user inputs the second message, as the number of messages sent by users in the group increases, a display screen of the first user terminal may no longer display the first message, but displays messages following the first message. In this case, after step S402, the first user terminal may keep the first message being displayed at a specific position of the first user terminal, for example, at the top of the first user terminal, so that the first user can conveniently learn the original message to which the user replies.

After the first user terminal displays the first message and the second message in an associated manner, the first user terminal may further display in a dimmed manner or in a folded manner, or hide a message displayed in a non-associated manner. For example, when there are excessive messages in the group, messages displayed in a non-associated manner may be folded, and in this case, the number of the folded messages may be displayed. A preset specific operation may also be set, and after it is detected that the user executes the specific operation, messages displayed in a non-associated manner are hidden, and in this case, only messages displayed in an associated manner are displayed on the first user terminal. A specific undo operation may also be preset to still use the chronological display manner.

To further make it convenient for the user to search for an associated message, after displaying the first message and the second message in an associated manner, the first user terminal may further receive a switching operation performed by the first user on the displayed first message or second message, and switch to a message associated with the message on which the switching operation is performed. For example, when a switching operation performed by the first user on the first message is detected, the first user terminal switches to a message associated with the first message, that is, the second message. Herein, the switch to a message refers to highlighting the message on a display screen of a terminal.

By using an application scenario of group chat, this embodiment focuses on a situation in which both the first user terminal and the second user terminal display the first message and the second message in an associated manner, so that both the first user and the second user can distinctly recognize that the second message is a reply message in response to the first message.

The foregoing embodiments of the present invention are all applied to the first user terminal, and embodiments of the present invention further provide an embodiment applied to a second user terminal.

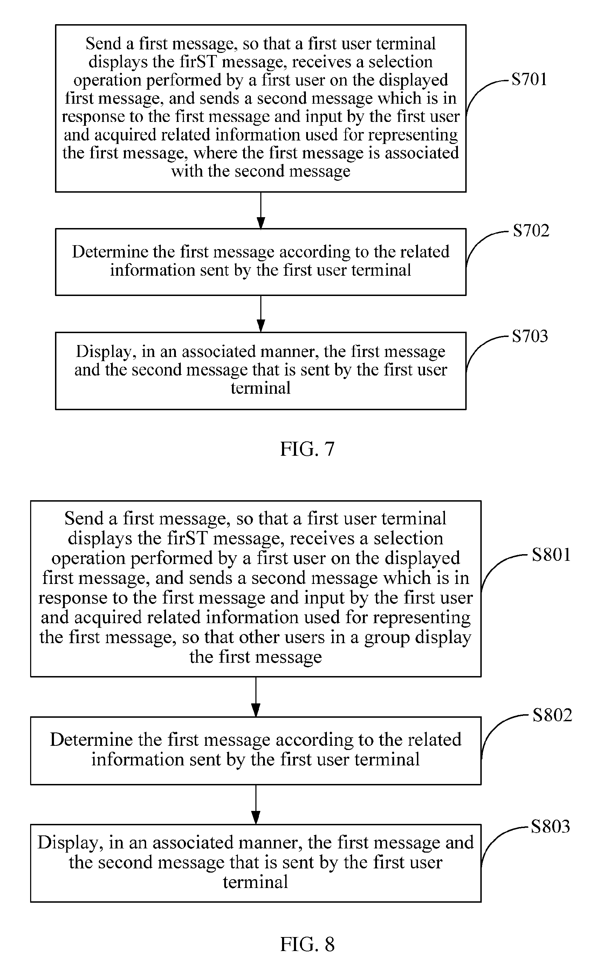

Referring to FIG. 7, an embodiment of the present invention provides a fifth embodiment of an information display method for an instant messaging tool, and this embodiment is applied to a second user terminal. The second user terminal is a terminal from which a second user logs in. It can be understood that, in the embodiment of the present invention, the second user corresponds to a user account, and therefore, the second user may use the user account to log in from different terminals. For example, a user having a WeChat account may use the WeChat account to log in from different terminals such as a mobile phone, an IPAD, and a notebook computer.

This embodiment specifically includes:
S701: A second user terminal sends a first message, so that a first user terminal displays the first message, receives a selection operation performed by a first user on the displayed first message, and sends a second message which is in response to the first message and input by the first user and acquired related information used for representing the first message, where the first message is associated with the second message.

The second user is a user sending the first message, and therefore, this step is actually that the second user sends a first message by using the second user terminal from which the second user logs in, so that the first user terminal receives and displays the first message, receives a selection operation performed by the first user on the displayed first message, and sends a second message and related information which is used for representing the first message. The second message is used by the first user for replying to the first message; the related information is acquired by the first user terminal, and may be an identifier of the first message, and may also be content of the first message, and the like, which is not limited in the embodiment of the present invention.

The first user terminal is a terminal from which the first user logs in. It can be understood that, in the embodiment of the present invention, the first user corresponds to a user account, and therefore, the first user may use the user account to log in from different terminals. For example, a user having a WeChat account may use the WeChat account to log in from different terminals such as a mobile phone, an IPAD, and a notebook computer.
S702: The second user terminal determines the first message according to the related information sent by the first user terminal.

After the first user terminal sends the related information, the second user terminal can acquire the related information, and determines the first message according to the related information.

It should be noted that, because the second user is the user sending the first message, the second user terminal generally stores the first message; therefore, the second user terminal can determine the first message as long as the related information of the first message is sent to the second user terminal.
S703: The second user terminal displays, in an associated manner, the first message and the second message that is sent by the first user terminal.

When acquiring the second message and the related information that are sent by the first user terminal, the second user terminal may further prompt the second user that a reply message in response to the first message has been received.

It can be learned from the foregoing technical solution that, in this embodiment, a second user sends a first message, so that a first user selects the first message sent by the second user, which means that the first user wants to reply to the first message; in this case, the first user terminal sends a second message which is in response to the first message and input by the first user and related information, and the second user terminal can determine the first message according to the related information, and the first message is associated with the second message, so that the second user terminal displays the first message and the second message in an associated manner, which distinctly displays that the second message is a reply message in response to the first message, and the second user does not need to actively search by filtering, thereby saving time of the user.

In step S701, the second user terminal sends the first message, so that the first user terminal displays the first message. Actually, in this step, the second user terminal may directly send the first message to the first user terminal, and the second user terminal may also send the first message to a server, so that the server sends the first message to the first user terminal, for example, when determining that the first user is online, the server directly sends the first message to the first user terminal; or the server sends a second push notification to the first user terminal, where the second push notification enables the first user terminal to acquire the first message from the server, for example, when determining that the first user is offline, the server sends a second push notification, so that the next time the first user goes online, the first user actively acquires the first message from the server by using the first user terminal from which the first user logs in when going online.

This embodiment may be used in a group chat process, that is, the first user and the second user of this embodiment may be users in a same group, and the first message and the second message may be messages displayed to all users in the group. Specifically, the first message sent by the second user terminal is actually sent to all the users in the group to which the first user and the second user belong. Messages displayed on the first user terminal are also messages sent to all the users in the group, and specifically, that the first user terminal sends the second message is also sending the second message to all the users in the group.

Considering circumstances such as a careless operation of the user, in this embodiment, the associated display of the second message and the first message may also be cancelled. Specifically, the cancellation may be receiving, after step S703, a disassociation request sent by the first user terminal, where the disassociation request includes related information used for representing the first message or representing the second message; the second user terminal cancels the associated display of the first message and the second message. Herein, the first user terminal may send the disassociation request after receiving an associated display cancellation operation performed by the first user on the first message.

In this embodiment, after the first user terminal detects that the first user selects the first message, and when the first user is inputting a second message, the first user terminal may further send an input notification to the second user terminal, where the input notification indicates that the first user is replying to the first message. After receiving the input notification sent by the first user terminal, the second user terminal may further display that the first user is replying to the first message.

In this embodiment, the second user terminal receives the related information used for representing the first message. In fact, the related information is used to enable the second user terminal to learn a message to which the received message specifically replies. The related information may be content of the first message, and in this case, the content of the first message is associated with the second message.

However, generally, an identifier is generated for each message, and the identifier is corresponding to the message. Therefore, a preferable manner is that the related information is an identifier of the first message, and therefore, in step S702, the first message is specifically determined according to the identifier of the first message. A message identifier is generally generated by a message ID generator, where the message ID generator may be set in a user terminal, and may also be set in a server. If a message identifier is generated by a user terminal, this embodiment further includes that the second user terminal generates and sends an identifier of the first message, so that the first user terminal acquires the identifier of the first message. Specifically, the second user terminal may send the generated identifier of the first message together with the first message. If a message identifier is generated by a server, in this embodiment, that the second user terminal sends a first message specifically is: the second user terminal sends the first message to a server, so that the server generates an identifier of the first message, and that the first user terminal acquires the identifier of the first message generated by the server.

In the embodiment of the present invention, the second user terminal displays the first message and the second message in an associated manner. Herein, the associated display refers to a display manner in which the user is capable of distinctly recognizing there is an association between messages. The first message and the second message may be displayed in a color different from those of other messages, displayed in a font different from those of other messages, or displayed in a manner of being marked with identical symbols, or displayed in another manner, which is not limited in the embodiment of the present invention.

In fact, after displaying the first message and the second message in an associated manner, the second user terminal may further display messages displayed in an associated manner only, or distinguish different associated messages; the following describes an exemplary embodiment of the present invention with reference to a specific application scenario.

Referring to FIG. 8, an embodiment of the present invention provides a sixth embodiment of an information display method for an instant messaging tool, and this embodiment is applied to a second user terminal. The second user terminal is a terminal from which a second user logs in.

To better describe the embodiment, this embodiment is described by using an application scenario in group chat as an example. This embodiment specifically includes:
S801: A second user terminal sends a first message, so that a first user terminal displays the first message, receives a selection operation performed by a first user on the displayed first message, and sends a second message which is in response to the first message and input by the first user and acquired related information used for representing the first message, where the first message is associated with the second message. The second user is a user sending the first message. The first user terminal is a terminal from which the first user logs in.

In this embodiment, the first user and the second user are users in a same group, and therefore, when the second user terminal sends the first message, the first message is also displayed to other users in the group. Moreover, the second user terminal can also receive and display messages sent by users in the group.
S802: The second user terminal determines the first message according to the related information sent by the first user terminal.

For this step, refer to step S702, and details are not repeated herein again.
S803: The second user terminal displays, in an associated manner, the first message and the second message that is sent by the first user terminal.

When the associated display of the first message and the second message is implemented in this step, specifically, the second user terminal may set both a display attribute of the first message and a display attribute of the second message to a first attribute identifier. Herein, the display attribute may be a parameter of one or more display attributes. For example, the display attribute is a color attribute, and therefore, the color attributes of the first message and the second message may be set to a same color identifier. Therefore, the associated display can be implemented according to the same color identifier.

In this embodiment, after replying to the first message with the second message, the first user may continue to reply to the first message, and in this case, the second user terminal may further display all reply messages in response to the first message and the first message in an associated manner. The first user or other users may further reply to other messages of the second user, for example, the second user terminal may further display a third message and a fourth message in an associated manner; in this case, the second user terminal may set both a display attribute of the third message and a display attribute of the fourth message to a second attribute identifier, where the first attribute identifier is different from the second attribute identifier, so that the associated display of the third message and the fourth message is distinguished from the associated display of the first message and the second message. The second user terminal may still display, in chronological order, which is the same as a current display manner, all messages that need to be displayed.

It should be noted that, in this embodiment, the first message and the second message may not only be displayed in an associated manner on the second user terminal, but also be displayed in an associated manner on terminals from which other users in the group log in.

After the second user terminal displays the first message and the second message in an associated manner, the second user terminal may further display in a dimmed manner or in a folded manner, or hide a message displayed in a non-associated manner. For example, when there are excessive messages in the group, messages displayed in a non-associated manner may be folded, and in this case, the number of the folded messages may be displayed. A preset specific operation may also be set, and after it is detected that the user executes the specific operation, messages displayed in a non-associated manner are hidden, and in this case, only messages displayed in an associated manner are displayed on the second user terminal. A specific undo operation may also be preset to still use the chronological display manner.

To further make it convenient for the user to search for an associated message, after displaying the first message and the second message in an associated manner, the second user terminal may further receive a switching operation performed by the second user on the displayed first message or second message, and switch to a message associated with the message on which the switching operation is performed. For example, when a switching operation performed by the second user on the first message is detected, the second user terminal switches to a message associated with the first message, that is, the second message. Herein, the switch to a message refers to highlighting the message on a display screen of a terminal.

By using an application scenario of group chat, this embodiment focuses on various preferable manners of associated display of the first message and the second message on the second user terminal, so that the user further distinctly recognizes that the second message is a reply message in response to the first message.

Embodiments of the information display methods in the embodiments of the present invention are described in the foregoing, and user terminals in the embodiments of the present invention are described in the following from the perspective of modularized functional entities.

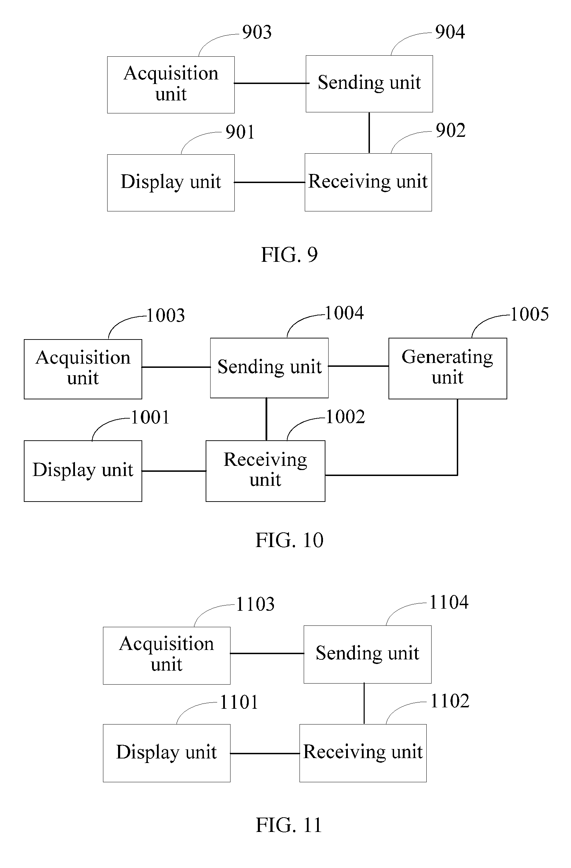

Referring to FIG. 9, an embodiment of the present invention provides a first embodiment of a first user terminal for an instant messaging tool, and in this embodiment, the first user terminal is a terminal from which a first user logs in. It can be understood that, in the embodiment of the present invention, the first user corresponds to a user account, and therefore, the first user may use the user account to log in from different terminals. For example, a user having a WeChat account may use the WeChat account to log in from different terminals such as a mobile phone, an IPAD, and a notebook computer.

This embodiment specifically includes: a display unit 901, a receiving unit 902, an acquisition unit 903, and a sending unit 904.

The display unit 901 is configured to display at least two messages. The at least two messages may be sent from different users, for example, may be messages sent by users in a group.

The receiving unit 902 is configured to receive a selection operation performed by a first user on at least one message of the at least two messages displayed, and use the at least one message as a first message.

Herein, the selection operation may be an operation such as a tap, slide, or touch & hold operation performed by the first user on the first message by using a mouse or a touchscreen, which is not limited in the embodiment of the present invention.

The acquisition unit 903 is configured to acquire related information used for representing the first message.

Herein, the related information is used for representing the first message, and therefore, may be an identifier of the first message, and may also be content of the first message, or the like, which is not limited in the embodiment of the present invention.

The sending unit 904 is configured to send a second message which is in response to the first message and input by the first user and the related information, where the first message is associated with the second message, so that a second user terminal determines the first message according to the related information, and displays the first message and the second message in an associated manner.

The second user terminal is a terminal from which the second user logs in; it can be understood that, in the embodiment of the present invention, the second user corresponds to a user account, and therefore, the second user may use the user account to log in from different terminals. Therefore, the second user terminal actually may include multiple terminals.

In this embodiment, a special input area may be set on the first user terminal, where each message input in the input area is a reply message in response to one or more messages. It may also be that, by default, after a message is selected, all messages input in the input area are reply messages in response to the selected message; or a certain message may be selected after messages are input in the input area, and this may also indicate that all the messages input in the input area are reply messages in response to the selected message. The embodiment of the present invention does not limit the specific manner of acquiring the input second message in response to the first message.

In this embodiment, the first message is sent by the second user; therefore, the sending unit 904 returns the second message, which is a reply to the first message, to the second user by using the second user terminal, and the first message and the second message are displayed on the second user terminal in an associated manner, so that the second user can distinctly determine that the second message is a reply message in response to the first message. Certainly, the sending unit 904 may further send an identifier of the first user, so that the second user terminal displays that a user sending the second message is the first user. It should be noted that, because the second user is the user sending the first message, the second user terminal generally stores the first message; therefore, the second user terminal can determine the first message as long as the related information of the first message is sent to the second user terminal.

It can be learned from the foregoing technical solution that, in this embodiment, the display unit 901 displays at least two messages; after a first user selects a first message from the at least two messages displayed, it indicates that the first user wants to reply to the first message, and in this case, the sending unit 903 sends a second message which is in response to the first message and input by the first user and related information, so that a sender of the first message, namely, a second user terminal, can determine the first message according to the related information, and the first message is associated with the second message, so that the second user terminal displays the first message and the second message in an associated manner, which distinctly displays that the second message is a reply message in response to the first message, and the second user does not need to actively search by filtering, thereby saving time of the user.

Moreover, in the embodiment of the present invention, when the first message and the second message are displayed in an associated manner, a current manner, in which messages are in chronological order, may not be changed, that is, the first message, the second message, and other messages are still displayed in chronological order.

The sending unit 904 in this embodiment sends the second message and the related information, so that the second user terminal acquires the second message and the related information. Actually, in this step, the sending unit 904 may directly send the second message and the related information to the second user terminal, and the sending unit 904 may also send the second message and the related information to a server, and after receiving the second message and the related information, the server may directly send the second message and the related information to the second user terminal, for example, when determining that the second user is online, the server directly sends the foregoing information; or the server may send a first push notification to the second user terminal, where the first push notification enables the second user terminal to acquire the second message and the related information from the server, for example, when determining that the second user is offline, the server sends a first push notification, so that the next time the second user goes online, the second user actively acquires the foregoing information from the server by using the second user terminal from which the second user logs in when the second user goes online.

This embodiment may be used in a group chat process, that is, the first user and the second user of this embodiment may be users in a same group, and the first message and the second message may be messages displayed to all users in the group. Specifically, the first message sent by the second user is actually sent to all the users in the group to which the first user and the second user belong. Messages displayed on the first user terminal are also messages sent to all the users in the group, and specifically, that the first user terminal sends the second message is also sending the second message to all the users in the group.

In this embodiment, after the first user selects the first message, the acquisition unit 903 acquires the related information used for representing the first message. In fact, the related information is used to enable the second user terminal to learn a message to which the received message specifically replies. Therefore, the related information may be content of the first message, and in this case, the first user terminal associates the content of the first message with the second message.

However, generally, an identifier is generated for each message, and the identifier corresponds to the message. Therefore, a preferable manner is that the related information is an identifier of the first message. In this case, the acquisition unit 903 acquires an identifier of the first message. The sending unit 904 also sends the identifier of the first message.

In this case, a corresponding identifier may also be generated for the second message. A message identifier is generally generated by a message ID generator, where the message ID generator may be set in a user terminal, and may also be set in a server. The following uses two embodiments to separately describe situations in which message identifiers are generated by a user terminal or message identifiers are generated by a server.

Referring to FIG. 10, an embodiment of the present invention provides a second embodiment of a first user terminal for an instant messaging tool, and in this embodiment, the first user terminal is a terminal from which a first user logs in. Different from other embodiments, in this embodiment, message identifiers are generated by a user terminal.

This embodiment specifically includes: a display unit 1001, a receiving unit 1002, an acquisition unit 1003, a sending unit 1004, and a generating unit 1005.

The display unit 1001 is configured to display at least two messages.

The receiving unit 1002 is configured to receive a selection operation performed by a first user on at least one message of the at least two messages displayed, and use the at least one message as a first message.

The acquisition unit 1003 is configured to acquire an identifier of the first message.

Specifically, the acquisition unit 1003 may acquire, according to position coordinates of the first message on a display, a message identifier corresponding to the position coordinates. The acquired identifier of the first message may be generated by a second user terminal, and when sending the first message, the second user also sends the identifier of the first message.

The generating unit 1005 is configured to generate an identifier of a second message, where the second message is a message which is in response to the first message and input by the first user.

The sending unit 1004 is configured to send the second message, the identifier of the second message generated by the generating unit 1004, and the identifier of the first message acquired by the acquisition unit 1003, where the identifier of the first message is associated with the identifier of the second message, so that the second user terminal determines the first message according to the identifier of the first message, and displays the first message and the second message in an associated manner. The second user terminal is a terminal from which the second user logs in, and the second user is a user sending the first message.

The sending unit 1004 may send the second message, the identifier of the second message, and the identifier of the first message to a server; when determining that the second user is online, the server sends the second message, the identifier of the second message, and the identifier of the first message to the second user terminal, and when determining that the second user is offline, the server sends a push notification to the second user, where the push notification enables the second user to actively acquire the second message, the identifier of the second message, and the identifier of the first message from the server by using the second user terminal from which the second user logs in when the second user goes online next time. The server may further store the second message, and store the identifier of the second message and the identifier of the first message in an associated manner.

This embodiment focuses on the situation in which message identifiers are generated by the user terminal, and the first message and the second message are associated specifically by associating the identifier of the first message with the identifier of the second message, so that the second user terminal displays the first message and the second message in an associated manner, which distinctly displays that the second message is a reply message in response to the first message, and the user does not need to actively search by filtering, thereby saving time of the user.

The situation in which message identifiers are generated by a server is described in the following by using an embodiment.

Referring to FIG. 11, an embodiment of the present invention provides a third embodiment of a first user terminal for an instant messaging tool, and in this embodiment, the first user terminal is a terminal from which a first user logs in. Different from other embodiments, in this embodiment, message identifiers are generated by a server.

This embodiment specifically includes: a display unit 1101, a receiving unit 1102, an acquisition unit 1103, and a sending unit 1104.

The display unit 1101 is configured to display at least two messages.

The receiving unit 1102 is configured to receive a selection operation performed by a first user on at least one message of the at least two messages displayed, and use the at least one message as a first message.

The acquisition unit 1103 is configured to acquire an identifier of the first message.

The acquired identifier of the first message may be generated by the server; when a second user sends the first message, the server generates the identifier of the first message, and sends the identifier of the first message to the acquisition unit 1103, or the acquisition unit 1103 acquires the identifier of the first message from the server.

The sending unit 1104 is configured to send a second message and the identifier of the first message acquired by the acquisition unit 1103, where the identifier of the first message is associated with the second message, so that the server generates an identifier of the second message, and sends the second message, the identifier of the second message, and the identifier of the first message, where the identifier of the first message is associated with the identifier of the second message, so that the second user terminal determines the first message according to the identifier of the first message, and displays the first message and the second message in an associated manner.

The second user terminal is a terminal from which the second user logs in, and the second user is a user sending the first message.

The sending unit 1104 may send the second message and the identifier of the first message to the server, and the server generates an identifier of the second message; when determining that the second user is online, the server sends the second message, the identifier of the second message, and the identifier of the first message to the second user terminal, and when determining that the second user is offline, the server sends a push notification to the second user, where the push notification enables the second user to actively acquire the second message, the identifier of the second message, and the identifier of the first message from the server by using the second user terminal from which the second user logs in when the second user goes online next time. The server may further store the second message, and store the identifier of the second message and the identifier of the first message in an associated manner.

This embodiment focuses on the situation in which message identifiers are generated by a server, and the first message and the second message are associated specifically by associating the identifier of the first message with the identifier of the second message, so that the second user terminal displays the first message and the second message in an associated manner, which distinctly displays that the second message is a reply message in response to the first message, and the user does not need to actively search by filtering, thereby saving time of the user.

In the embodiment of the present invention, the second user terminal displays the first message and the second message in an associated manner. In fact, the first user terminal may also display the first message and the second message in an associated manner, so that the first user can also distinctly recognize the reply message from the first user to the second user. The following gives descriptions by using an embodiment and with reference to a specific application scenario.

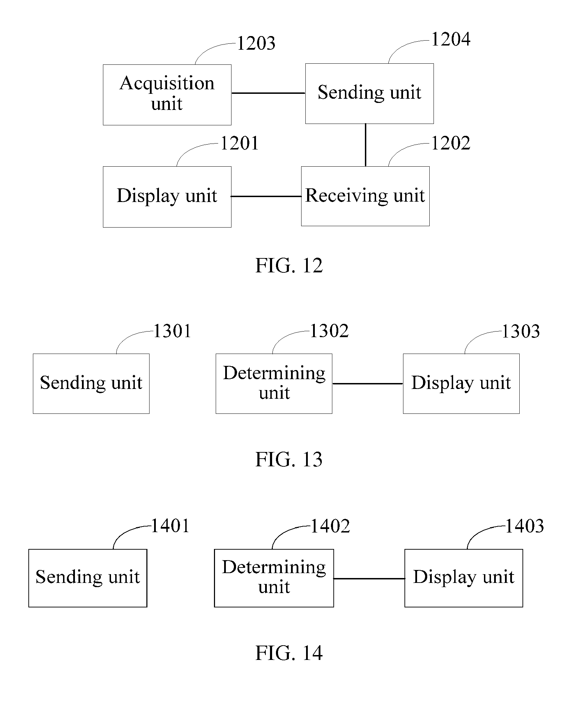

Referring to FIG. 12, an embodiment of the present invention provides a fourth embodiment of a first user terminal for an instant messaging tool, and in this embodiment, the first user terminal is a terminal from which a first user logs in. Different from other embodiments, in this embodiment, a first message and a second message are displayed in an associated manner on the first user terminal.

To better describe the embodiment, this embodiment is described by using an application scenario of group chat as an example. This embodiment specifically includes: a display unit 1201, a receiving unit 1202, an acquisition unit 1203, and a sending unit 1204.

The display unit 1201 is configured to display at least two messages sent by users in a group. A first user is one of the users in the group.

The receiving unit 1202 is configured to receive a selection operation performed by the first user on at least one message of the at least two messages displayed, and use the at least one message as a first message.

The acquisition unit 1203 is configured to acquire related information of the first message.

Herein, the related information may be an identifier of the first message, and may also be content of the first message.

The sending unit 1204 is configured to send a second message which is in response to the first message and input by the first user and the related information, where the first message is associated with the second message, so that a second user terminal determines the first message according to the related information, and displays the first message and the second message in an associated manner. The second user terminal is a terminal from which the second user logs in, and the second user is a user sending the first message.

The display unit 1201 is further configured to display the first message and the second message in an associated manner.

In this embodiment, after the first user selects the first message, in a period in which the user inputs the second message, as more messages are sent by users in the group, the display unit 1201 of the first user terminal may no longer display the first message, but displays messages following the first message. In this case, the display unit 1201 may keep the first message being displayed at a specific position of the display unit 1201, for example, at the top of the display unit 1201, so that the first user can conveniently learn the original message to which the user replies.

The display unit 1201 may further display in a dimmed manner or in a folded manner or hide a message displayed in a non-associated manner. For example, when there are excessive messages in the group, messages displayed in a non-associated manner may be folded, and in this case, the number of the folded messages may be displayed. A preset specific operation may also be set, and after it is detected that the user executes the specific operation, messages displayed in a non-associated manner are hidden, and in this case, only messages displayed in an associated manner are displayed by the display unit 1201. A specific undo operation may also be preset to still use the chronological display manner.

To further make it convenient for the user to search for an associated message, the display unit 1201 may further receive a switching operation performed by the first user on the displayed first message or second message, and switch to a message associated with the message on which the switching operation is performed. For example, when a switching operation performed by the first user on the first message is detected, the display unit 1201 switches to a message associated with the first message, that is, the second message. Herein, the switch to a message refers to highlighting the message on a display of a terminal.

By using an application scenario of group chat, this embodiment focuses on a situation in which both the first user terminal and the second user terminal display the first message and the second message in an associated manner, so that both the first user and the second user can distinctly recognize that the second message is a reply message in response to the first message.

The foregoing modularized embodiments of the present invention are all applied to the first user terminal, and embodiments of the present invention further provide a modularized embodiment applied to a second user terminal.

Referring to FIG. 13, an embodiment of the present invention provides a first embodiment of a second user terminal for an instant messaging tool, and in this embodiment, the second user terminal is a terminal from which a second user logs in. It can be understood that, in the embodiment of the present invention, the second user corresponds to a user account, and therefore, the second user may use the user account to log in by using different terminals. For example, a user having a WeChat account may use the WeChat account log in from different terminals such as a mobile phone, an IPAD, and a notebook computer.

This embodiment specifically includes: a sending unit 1301, a determining unit 1302, and a display unit 1303.

The sending unit 1301 is configured to send a first message, so that a first user terminal displays the first message, receives a selection operation performed by a first user on the displayed first message, and sends a second message which is in response to the first message and input by the first user and acquired related information used for representing the first message, where the first message is associated with the second message.

The second user is a user sending the first message, and therefore, herein, the second user actually sends the first message by using the sending unit of the second user terminal from which the second user logs in, so that the first user terminal receives and displays the first message, receives a selection operation performed by the first user on the displayed first message, and sends a second message and related information which is used for representing the first message. The second message is a reply of the first user to the first message; the related information is acquired by the first user terminal, and may be an identifier of the first message, and may also be content of the first message, and the like, which is not limited in the embodiment of the present invention.

The determining unit 1302 is configured to determine the first message according to the related information sent by the first user terminal.

When acquiring the second message and the related information that are sent by the first user terminal, the second user terminal may further prompt the second user that a reply message in response to the first message has been received.

The display unit 1303 is configured to display, in an associated manner, the first message and the second message that is sent by the first user terminal.

It can be learned from the foregoing technical solution that, in this embodiment, a second user sends a first message, so that a first user selects the first message sent by the second user, which means that the first user wants to reply to the first message; in this case, the first user terminal sends a second message which is in response to the first message and input by the first user and related information, and a determining unit 1302 can determine the first message according to the related information, where the first message is associated with the second message, so that a display unit 1303 displays the first message and the second message in an associated manner, which distinctly displays that the second message is a reply message in response to the first message, and the second user does not need to actively search by filtering, thereby saving time of the user.

In this embodiment, the sending unit 1301 is configured to send a first message, so that the first user terminal displays the first message. Actually, the sending unit 1301 may directly send the first message to the first user terminal, and may also send the first message to a server, so that the server sends the first message to the first user terminal, for example, when determining that the first user is online, the server directly sends the first message to the first user terminal; or the server sends a second push notification to the first user terminal, where the second push notification enables the first user terminal to acquire the first message from the server, for example, when determining that the first user is offline, the server sends a second push notification, so that the next time the first user goes online, the first user actively acquires the first message from the server by using the first user terminal from which the first user logs in when going online.

This embodiment may be used in a group chat process, that is, the first user and the second user in this embodiment may be users in a same group, and the first message and the second message may be messages displayed to all users in the group. Specifically, the first message sent by the sending unit 1301 is actually sent to all the users in the group to which the first user and the second user belong. Messages displayed on the first user terminal are also messages sent to all the users in the group, and specifically, that the first user terminal sends the second message is also sending the second message to all the users in the group.

In this embodiment, the second user terminal receives the related information used for representing the first message. In fact, the related information is used to enable the second user terminal to learn a message to which the received message specifically replies. The related information may be content of the first message, and in this case, the content of the first message is associated with the second message. However, generally, an identifier is generated for each message, and the identifier corresponds to the message. Therefore, a preferable manner is that the related information is an identifier of the first message.

In fact, after displaying the first message and the second message in an associated manner, the display unit 1303 may further display messages, which is displayed in an associated manner only, or distinguish different associated messages; the following describes an exemplary embodiment of the present invention with reference to a specific application scenario.

Referring to FIG. 14, an embodiment of the present invention provides a second embodiment of a second user terminal for an instant messaging tool, and in this embodiment, the second user terminal is a terminal from which a second user logs in.

To better describe the embodiment, this embodiment is described by using an application scenario of group chat as an example. This embodiment specifically includes: a sending unit 1401, a determining unit 1402, and a display unit 1403.

The sending unit 1401 is configured to send a first message, so that a first user terminal displays the first message, receives a selection operation performed by a first user on the displayed first message, and sends a second message which is in response to the first message and input by the first user and acquired related information used for representing the first message, where the first message is associated with the second message. The second user is a user sending the first message. The first user terminal is a terminal from which the first user logs in.

In this embodiment, the first user and the second user are users in a same group, and therefore, when the sending unit 1401 sends the first message, the first message is also displayed to other users in the group. Moreover, the second user terminal can also receive and display messages sent by users in the group.

The determining unit 1402 is configured to determine the first message according to the related information sent by the first user terminal.

The display unit 1403 is configured to display, in an associated manner, the first message and the second message that is sent by the first user terminal.

When the display unit 1403 implements the associated display of the first message and the second message, the display unit 1403 may specifically set both a display attribute of the first message and a display attribute of the second message to a first attribute identifier. Herein, the display attribute may be a parameter of one or more display attributes. For example, the display attribute is a color attribute, and therefore, the color attributes of the first message and the second message may be set to a same color identifier. Therefore, the associated display can be implemented according to the same color identifier.

In this embodiment, after replying to the first message with the second message, the first user may continue to reply to the first message, and in this case, the display unit 1403 may further display all reply messages in response to the first message and the first message in an associated manner. The first user or other users may further reply to other messages of the second user, for example, the display unit 1403 may further display a third message and a fourth message in an associated manner; in this case, the display unit 1403 may set both a display attribute of the third message and a display attribute of the fourth message to a second attribute identifier, where the first attribute identifier is different from the second attribute identifier, so that the associated display of the third message and the fourth message is distinguished from the associated display of the first message and the second message. The second user terminal may still display, in chronological order, which is the same as a current display manner, all messages that need to be displayed.

The display unit 1403 may further display, on basis of the display unit 1401, in a dimmed manner or in a folded manner or hide a message displayed in a non-associated manner. For example, when there are excessive messages in the group, the display unit 1403 may fold messages displayed in a non-associated manner, and in this case, the number of the folded messages may be displayed. A preset specific operation may also be set, and after it is detected that the user executes the specific operation, messages displayed in a non-associated manner are hidden, and in this case, the display unit 1403 only displays messages displayed in an associated manner. A specific undo operation may also be preset to still use the chronological display manner.

To further make it convenient for the user to search for an associated message, this embodiment may further include a receiving unit; the receiving unit is configured to receive a switching operation performed by the second user on the displayed first message or second message, and the display unit 1403 is further configured to switch to a message associated with the message on which the switching operation is performed.

By using an application scenario of group chat, this embodiment focuses on various preferable manners of associated display of the first message and the second message on the second user terminal, so that the user further distinctly recognizes that the second message is a reply message in response to the first message.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. An information display method for an instant messaging tool, comprising:
displaying at least two messages;
receiving a selection operation performed by a first user on at least one message of the at least two messages displayed, and using the at least one message as a first message;
acquiring related information used for representing the first message; and
sending a second message which is in response to the first message and input by the first user and the related information, wherein the first message is associated with the second message, so that a second user terminal determines the first message according to the related information, and displays the first message and the second message in an associated manner,
wherein the second user terminal is a terminal from which the second user logs in, and the second user is a user sending the first message.

2. The method according to claim 1, wherein the related information used for representing the first message is specifically: content of the first message or an identifier of the first message.

3. The method according to claim 2, wherein if the related information used for representing the first message is the identifier of the first message,
before the sending, by the first user terminal, the second message and the related information, the method further comprises:
generating, by the first user terminal, an identifier of the second message; and
when sending, by the first user terminal, the second message and the related information, the method further comprises: sending, by the first user terminal, the identifier of the second message, wherein the identifier of the first message is associated with the identifier of the second message.

4. The method according to claim 2, wherein if the related information used for representing the first message is the identifier of the first message,
the sending, by the first user terminal, the second message and the related information is specifically:
sending, by the first user terminal to a server, the second message and the identifier of the first message, wherein the identifier of the first message is associated with the second message, so that the server generates an identifier of the second message, and associates the identifier of the first message with the identifier of the second message.

5. The method according to any one of claims 1 to 4, wherein the sending, by the first user terminal, the second message and the related information is specifically:
sending, by the first user terminal to a server, the second message and the related information, so that the server sends the second message and the related information to the second user terminal, or the server sends a first push notification to the second user terminal, wherein the first push notification enables the second user terminal to acquire the second message and the related information from the server.

6. An information display method for an instant messaging tool, comprising:
sending a first message, so that a first user terminal displays the first message, receives a selection operation performed by a first user on the displayed first message, and sends a second message which is in response to the first message and input by the first user and acquired related information used for representing the first message, wherein the first message is associated with the second message;
determining the first message according to the related information sent by the first user terminal; and
displaying, in an associated manner, the first message and the second message that is sent by the first user terminal.

7. The method according to claim 6, wherein the related information used for representing the first message is specifically: content of the first message or an identifier of the first message.

8. The method according to claim 6 or 7, after the displaying, in an associated manner, the first message and the second message, further comprising:
displaying in a dimmed manner or in a folded manner or hiding a message displayed in a non-associated manner.

9. The method according to any one of claims 6 to 8, after the displaying, in an associated manner, the first message and the second message, further comprising:
receiving a switching operation performed by the second user on the displayed first message or second message; and
switching to a message associated with the message on which the switching operation is performed.

10. The method according to any one of claims 6 to 9, wherein the sending a first message is specifically:
sending the first message to a server, so that the server sends the first message to the first user terminal, or the server sends a second push notification to the first user terminal, wherein the second push notification enables the first user terminal to acquire the first message from the server.

11. A user terminal for an instant messaging tool, wherein the user terminal is a first user terminal, and the first user terminal comprises: a display unit, a receiving unit, an acquisition unit, and a sending unit;
the display unit is configured to display at least two messages;
the receiving unit is configured to receive a selection operation performed by a first user on at least one message of the at least two messages displayed, and use the at least one message as a first message;
the acquisition unit is configured to acquire related information used for representing the first message; and
the sending unit is configured to send a second message which is in response to the first message and input by the first user and the related information, wherein the first message is associated with the second message, so that a second user terminal determines the first message according to the related information, and displays the first message and the second message in an associated manner,
wherein the second user terminal is a terminal from which the second user logs in, and the second user is a user sending the first message.

12. The first user terminal according to claim 11, wherein the related information used for representing the first message is specifically: content of the first message or an identifier of the first message.

13. The first user terminal according to claim 12, wherein if the related information used for representing the first message is the identifier of the first message, the first user terminal further comprises: a generating unit,
wherein the generating unit is configured to generate an identifier of the second message; and the sending unit is further configured to send the identifier of the second message, wherein the identifier of the first message is associated with the identifier of the second message.

14. The first user terminal according to claim 12, wherein if the related information used for representing the first message is the identifier of the first message,
the sending unit is configured to send the second message and the related information is specifically:
the sending unit is configured to send the second message and the identifier of the first message to a server, wherein the identifier of the first message is associated with the second message, so that the server generates an identifier of the second message, and associates the identifier of the first message with the identifier of the second message.

15. The first user terminal according to any one claims 11 to 14, wherein
that the sending unit is configured to send the second message and the related information is specifically:
the sending unit is configured to send the second message and the related information to a server, so that the server sends the second message and the related information to the second user terminal, or the server sends a first push notification to the second user terminal, wherein the first push notification enables the second user terminal to acquire the second message and the related information from the server.

16. A user terminal for an instant messaging tool, wherein the user terminal is a second user terminal, and the second user terminal comprises: a sending unit, a determining unit, and a display unit;
the sending unit is configured to send a first message, so that a first user terminal displays the first message, receives a selection operation performed by a first user on the displayed first message, and sends a second message which is in response to the first message and input by the first user and acquired related information used for representing the first message, wherein the first message is associated with the second message;
the determining unit is configured to determine the first message according to the related information sent by the first user terminal; and
the display unit is configured to display, in an associated manner, the first message and the second message that is sent by the first user terminal.

17. The second user terminal according to claim 16, wherein the related information used for representing the first message is specifically: content of the first message or an identifier of the first message.

18. The second user terminal according to claim 16 or 17, wherein
the display unit is further configured to display in a dimmed manner or in a folded manner or hide a message displayed in a non-associated manner.

19. The second user terminal according to any one of claims 16 to 18, wherein the second user terminal further comprises a receiving unit;
the receiving unit is further configured to receive a switching operation performed by the second user on the displayed first message or second message; and
the display unit is further configured to switch to a message associated with the message on which the switching operation is performed.

20. The second user terminal according to any one of claims 16 to 19, wherein
that the sending unit is configured to send a first message is specifically:
the sending unit is configured to send the first message to a server, so that the server sends the first message to the first user terminal, or the server sends a second push notification to the first user terminal, wherein the second push notification enables the first user terminal to acquire the first message from the server.
